(19) Europäisches Patentamt
European Patent Office
Office européen des brevets

(11) **EP 1 116 356 B1**

(12) **EUROPÄISCHE PATENTSCHRIFT**

(45) Veröffentlichungstag und Bekanntmachung des Hinweises auf die Patenterteilung:
**12.03.2008 Patentblatt 2008/11**

(21) Anmeldenummer: **99953671.7**

(22) Anmeldetag: **01.09.1999**

(51) Int Cl.:
*H04L 7/033* (2006.01)    *H04Q 11/04* (2006.01)

(86) Internationale Anmeldenummer:
**PCT/DE1999/002758**

(87) Internationale Veröffentlichungsnummer:
**WO 2000/018059 (30.03.2000 Gazette 2000/13)**

(54) **VORRICHTUNG UND VERFAHREN ZUR REGELUNG DES ABTASTTAKTES IN EINEM DATENÜBERTRAGUNGSSYSTEM**

DEVICE AND METHOD FOR REGULATING THE SAMPLING RATE IN A DATA TRANSFER SYSTEM

DISPOSITIF ET PROCEDE POUR LA REGULATION DE LA CADENCE D'ECHANTILLONNAGE DANS UN SYSTEME DE TRANSMISSION DE DONNEES

(84) Benannte Vertragsstaaten:
**AT DE FR GB IT**

(30) Priorität: **23.09.1998 DE 19843707**

(43) Veröffentlichungstag der Anmeldung:
**18.07.2001 Patentblatt 2001/29**

(73) Patentinhaber: **Infineon Technologies AG 81669 München (DE)**

(72) Erfinder: **SCHENK, Heinrich D-81476 München (DE)**

(74) Vertreter: **Barth, Stephan Manuel Reinhard-Skuhra-Weise & Partner GbR Patentanwälte Friedrichstrasse 31 80801 München (DE)**

(56) Entgegenhaltungen:
EP-A- 0 316 876        US-A- 4 995 031
US-A- 5 065 412

- **HESPELT V ET AL: "ZUR SYNCHRONISATION DES EMPFAENGERS FUER DEN ISDN-BASISANSCHLUSS" NACHRICHTENTECHNISCHE BERICHTE,DE, ANT NACHRICHTENTECHNIK GMB. BACKNANG, Nr. 5, 1. November 1988 (1988-11-01), Seiten 40-49, XP000233875**
- **HECHLER E ET AL: "ISDN-U-SCHNITTSTELLENBAUSTEINE: IBC UND IEC" ELEKTRONIK,DE,FRANZIS VERLAG GMBH. MUNCHEN, Bd. 38, Nr. 5, 3. März 1989 (1989-03-03), Seiten 120-122,125-126, XP000048137 ISSN: 0013-5658**

**Beschreibung**

Die vorliegende Erfindung betrifft eine Vorrichtung und ein Verfahren zur Regelung des Abtasttaktes in einem digitalen Datenübertragungssystem, bei dem in regelmäßigen zeitlichen Abständen ein Synchronisierwort übertragen wird, mit dem auch der empfangsseitige Abtasttakt geregelt wird, wobei das empfangene, abgetastete und gefilterte Signal einem Taktregelkriteriumsfilter und einer Vorrichtung zur Erkennung des Synchronisierwortes zugeführt wird, wobei diese Vorrichtung einen Schalter ansteuert, der das Taktregelkriterium einer Verstellogik für den Abtasttakt (Symboltakt) zuführt.

Die erfindungsgemäße Vorrichtung und das erfindungsgemäße Verfahren ist vorzugsweise für ISDN-Basisband-Teilnehmeranschlüsse vorgesehen.

Bei der ISDN Anschlußtechnik werden an der U-Schnittstelle Basisband-Übertragungsverfahren (PAMP = Pulsamplitudenmodulation, Stichwort: 4B3T,2B1Q) verwendet, wobei zur Synchronisation in regelmäßigen zeitlichen Abständen ein nicht verwürfeltes Synchronisierwort übertragen wird. Mit Hilfe dieses Synchronisierwortes läßt sich auf der Empfangsseite die Rahmenstruktur (2xB+D - Kanäle) wieder zurückgewinnen. Man kann jedoch auch die Regelung des empfangsseitigen Abtasttaktes hiervon ableiten. Die vorliegende Erfindung geht als Stand der Technik von dem derzeitigen U-Baustein PEB 2091 und PEB 24911 (IEC-Q) der Anmelderin aus.

In diesem U-Baustein ist eine Taktregelung realisiert, die die Taktinformation vom empfangenen Syncwort ableitet. US-A-5 065 412 offenbart hierzu eine Korrelation zur Erkennung des Synchronisierworts sowie eine nachfolgende Filterung des Taktregelkriteriums. Ausgehend von diesem Stand der Technik ist es Aufgabe der vorliegenden Erfindung, den Phasenjitter des Symboltakts aufgrund äußerer und innerer Störungen weiter zu reduzieren, und gleichzeitig den Symboltakt auf einen optimalen Abtastzeitpunkt im Hinblick auf eine möglichst geringe Fehlerwahrscheinlichkeit bei rauschförmigen Störungen am Eingang einzustellen.

Erfindungsgemäß wird diese Aufgabe dadurch gelöst, daß bei der Vorrichtung gemäß dem Stand der Technik zwischen dem Taktregelkriteriumsfilter und der Verstellogik für den Symboltakt eine Betragsbildungsschaltung und ein Hochpaß angeordnet sind.

Weiter wird die Aufgabe erfindungsgemäß durch ein Verfahren gemäß dem Stand der Technik gelöst, bei dem zusätzlich der Betrag des Ausgangswerts des Taktregelkriteriums-Filters gebildet wird, und dieser einer Hochpaßfilterung unterworfen wird, bevor er der Verstellogik zugeführt wird.

Es ist dabei besonders bevorzugt, daß die Übertragungsfunktion des Hochpasses bzw. der Hochpaßfilterung $(1-z^{-1})$ lautet.

Vorzugsweise wird als Übertragungsfunktion des Taktregelkriteriums-Filters $(1-z^{-1})^5*(1-z^{-2})*(1-k_0 z^{-1})$ gewählt. Dabei ist es besonders bevorzugt, $k_0 = -\frac{3}{8}$ für kurze Leitungen und $k_0 = +\frac{1}{8}$ für lange Leitungen zu wählen. Die Definition für "kurze" und "lange" Leitungen entspricht dabei der im Stand der Technik üblichen Definition für diesen Parameter.

Im folgenden wird die Erfindung anhand des in den schematischen Zeichnungen dargestellten Ausführungsbeispiels näher erläutert. Es zeigen:

Fig. 1 das Blockschaltbild eines Taktregelkreises gem. dem Stand der Technik;

Fig. 2 die Signalstörabstände in Abhängigkeit von der Abtastphase;

Fig. 3 die Lage des optimalen Abtastzeitpunktes bezogen auf die zeitliche Lage des Impulsmaximums nach dem Kompromißentzerrer in Abhängigkeit von der Leitungslänge;

Fig. 4 Korrelationssumme und Taktregelkriterium;

Fig. 5 die Abweichung des Nulldurchgangs von der optimalen Abtastphase in Abhängigkeit von der Leitungslänge;

Fig. 6 den Signal/Noise-Verlust vor dem Entscheider in Abhängigkeit von der Leitungslänge;

Fig. 7 die Abweichung des Nulldurchgangs vom optimalen Abtastzeitpunkt in Abhängigkeit von der Leitungslänge für drei verschiedene Taktregelkriteriums-Übertragungsfunktionen;

Fig. 8 den Signal/Noise-Verlust vor dem Entscheider in Abhängigkeit von der Leitungslänge für drei verschiedene Taktregelkriteriums-Übertragungsfunktionen;

Fig. 9 die Ausgangswerte des Korrelators und des Taktregelkriteriums bei maximaler Leitungslänge;

Fig. 10 die Signale am Ausgang des Taktregelkriteriums-Filters bei ausgeblendetem Sendesyncwort;

Fig. 11 Worst-Case Werte und Effektivwerte des Übersprechens in Abhängigkeit von der Abtastphase;

Fig. 12 den Dämpfungsverlauf von Hochpaß, Kompromißentzerrer und Taktregelkriteriumsfilter;

Fig. 13 die erfindungsgemäß modifizierte Anordnung für die Ermittlung des Taktregelkriteriums;

Fig. 14 Korrelationssumme und erfindungsgemäß modifiziertes Taktregelkriterium;

Fig. 15 den Ausgang des Korrelators und des erfindungsgemäß modifizierten Taktregelkriteriums; und

Fig. 16 die Rauschleistungen am Ausgang der einzelnen Teilsysteme innerhalb des erfindungsgemäß modifizierten Empfängers.

Ausgehend von der im Siemens IEC-Q verwendeten Empfängerstruktur wird in der folgenden Beschreibung zunächst für verschiedene Leitungslängen die optimale Abtastphase sowohl mit als auch ohne Noise Prediktor bestimmt. Nach der Analyse des bisher verwendeten Taktregelkriteriums wird die sich ergebende Abweichung von der optimalen Abtastphase und der hieraus resultierende S/N-Verlust in Abhängigkeit von der Leitungslänge angegeben. Es wird gezeigt, daß eine Parameterumschaltung für das Taktregelkriteriums-Filter nach Maßgabe der Leitungslänge zur Erreichung möglichst guter Systemeigenschaften für alle Leitungslängen sinnvoll ist - so wie es bereits im derzeitigen IEC-Q realisiert wird.

Erfindungsgemäß wird eine modifizierte Anordnung zur Realisierung eines Taktregelkriteriums angegeben, mit dem sowohl das am Empfänger-Eingang eingekoppelte äußere Störsignal als auch die inneren Störsignale (z.B. verursacht durch Quantisierung oder unvollständige Echokompensation) das Taktregelkriterium wesentlich geringer beeinflussen. Für die vorgeschlagene Lösung ergibt sich eine Verbesserung um etwa 9 dB , so daß hiermit ein besseres Verhalten des Taktregelkreises bezüglich Eigenjitter und Jitterfrequenzgang zu erreichen ist.

Bei der ISDN-Übertragungstechnik wird in regelmäßigen zeitlichen Abständen eine Synchronisationsinformation in Form eines Syncwortes übertragen. Bei der auf dem 2B1Q Leitungscode basierten Technik besteht dieses Syncwort aus neun Symbolen und wird jeweils nach 120 ausgesendeten Symbolen wiederholt. Der durch das Syncwort definierte Uk0 Rahmen hat somit eine Dauer von

$$\frac{120}{80000\,\dfrac{Symbole}{s}} = 1{,}5ms$$

Das Syncwort besteht aus den Symbolen : +3 +3 -3 -3 -3 +3 -3 +3 +3.

Durch Korrelation des Empfangssignals mit diesem Syncwort läßt sich aus dem verzerrten Empfangssignal die Position des empfangenen Syncwortes ermitteln und somit der Rahmentakt regenerieren.

Das Syncwort kann auch zur Regelung der Empfangstaktphase herangezogen werden. Vorteilhaft hierbei ist die Unabhängigkeit der Taktphasenregelung vom Status des Entzerrers. Bei entscheidungsrückgekoppelten Taktregelungen ist diese Unabhängigkeit nicht gegeben, die Konvergenz kann durch Fehlentscheidungen bei der Datenregenerierung beeinträchtigt werden. Wird das Syncwort zur Taktrückgewinnung verwendet, dann muß zunächst das empfangene Signal nach geeigneter Filterung und Abtastung im Rahmentakt innerhalb einer genau definierten Symbolposition an den Taktregelkreis weitergegeben werden. Nach Erkennung der Position des Syncwortes mit-Hilfe einer speziellen Rahmenerkennungseinrichtung ist die Lage für die Abtastung des Regelkriteriums innerhalb des Rahmens genau definiert.

Dabei muß die Übertragungsfunktion für das Taktregelkriterium so definiert werden, daß sich im Abtastzeitpunkt ein Nulldurchgang des Ausgangssignals ergibt. Dieser Nulldurchgang stellt die Regelkennlinie dar.

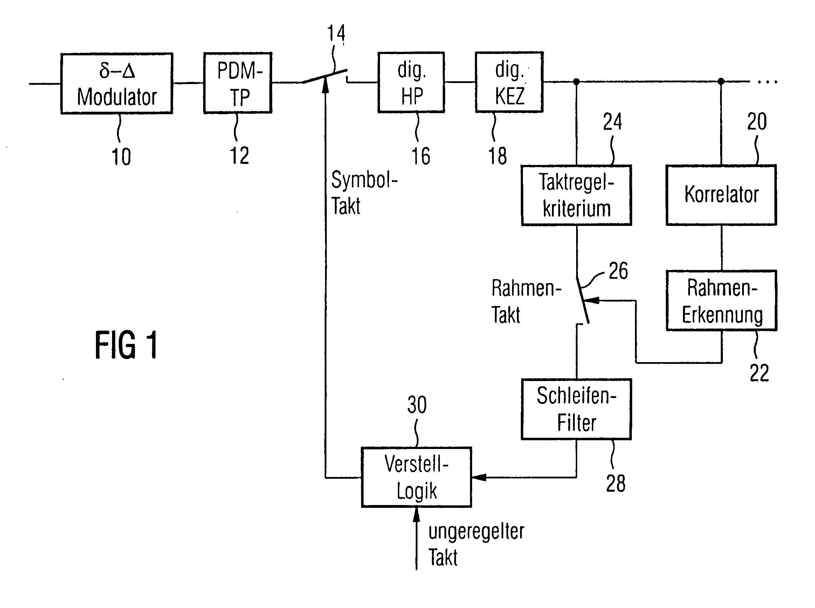

Fig. 1 zeigt das Blockschaltbild der hier betrachteten Taktregelung.

Das Eingangssignal wird zuerst einem Sigma-Delta-Modulator 10 zugeführt. Von dort gelangt es zu einem Pulsdauermodulations-Tiefpaß 12. Durch einen Abtastschalter 14 wird das Signal mit dem Symboltakt abgetastet und sodann einem digitalen Hochpaß 16 zugeführt. Von dort wird das Signal an einen digitalen Kompromißentzerrer 18 weitergeleitet. Der Ausgang des digitalen Kompromißentzerrers führt dann zu einem Entscheider, der aus dem Signal die digitalen Daten zurückgewinnt. Das Ausgangssignal des digitalen Kompromißentzerrers wird jedoch auch noch über einen Korrelator 20 der Rahmenerkennung 22 zugeführt, die den Rahmentakt wiederherstellt. Der Ausgangswert des digitalen Kompromißentzerrers 18 wird darüber hinaus noch der Taktregelkriteriumsschaltung 24 zugeführt. Deren Ausgangswerte werden mit einem Abtastschalter 26 mit dem Rahmentakt von der Rahmenerkennung 22 abgetastet. Über ein Schleifenfilter 28 wird das mit dem Rahmentakt abgetastete Ausgangssignal des Taktregelkriteriums der Verstellogik 30 zugeführt, die den ungeregelten Takt so verschiebt, daß er dem für die Abtastung des Eingangssignals optimalen Symboltakt entspricht. Dieser Symboltakt steuert den Abtastschalter 14.

Das Taktregelkriteriums-Filter 24 hat in diesem Zusammenhang die Aufgabe, aus dem Empfangssignal ein geeignetes Signal zur Regelung des Abtastzeitpunktes zu generieren. Dieses Signal sollte die folgenden drei Bedingungen möglichst gut erfüllen:

a) Nulldurchgang im "optimalen" Abtastzeitpunkt unabhängig von der verwendeten Leitung; optimal in Bezug auf eine möglichst geringe Fehlerwahrscheinlichkeit bei rauschförmigen Störungen am Eingang

b) das am Eingang des Taktregelkriteriumfilters 24 eingekoppelte Rauschsignal sollte - unter Berücksichtigung der Steilheit der Regelkennlinie - so gering wie möglich dem Taktregelkriterium am Ausgang des Filters 24 überlagert sein, um den Phasenjitter bedingt durch äußere und innere Störungen zu minimieren

c) das durch die vor und nach dem Syncwort gesendeten stochastischen Daten hervorgerufene Übersprechen im Nulldurchgang des Regelkriteriums sollte möglichst gering sein, um einen möglichst geringen Eigenjitter zu produzieren.

Die Abtastphase ist dann optimal, wenn die Anzahl der falsch entschiedenen Symbole im Empfänger minimal ist. Bei gaußverteilten Störsignalen kann die Fehlerwahrscheinlichkeit analytisch berechnet werden, wenn die Leistung bzw. der Effektivwert des Rauschsignals und der Restfehler des entzerrten Nutzsignals bekannt sind. Beide Größen hängen wegen der Abhängigkeit vom Vorschwinger-Entzerrer (linearer Entzerrer) von der Lage des Abtastzeitpunktes ab.

Als Zielfunktion läßt sich der resultierende Signal-Störabstand am Entscheider-Eingang in Abhängigkeit von der Abtastphase definieren, wobei noch auf eine feste Rauschleistung am Eingang normiert werden muß.

Bei der Beurteilung der optimalen Abtastphase muß bei Verwendung eines Noise Prediktors auch dessen Einfluß auf den Signalstörabstand berücksichtigt werden, da der S/N-Gewinn durch den Noise Prediktor ebenfalls von der Abtastphase abhängt. Unter Berücksichtigung des digitalen Hochpasses 16 mit der Übertragungsfunktion

$$H_{HP}(z) = \frac{1 - z^{-1}}{1 - 0.5 \cdot z^{-1}}$$

und des Kompromißentzerrers 18 mit der Übertragungsfunktion

$$H_{KEZ}(z) = \frac{-\frac{1}{8} + z^{-1}}{1 + \frac{1}{4} \cdot z^{-1}}$$

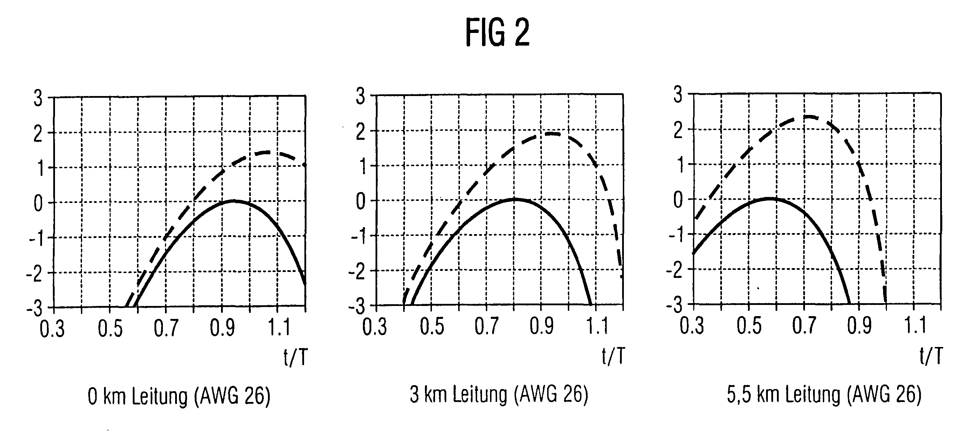

ergeben sich die in Fig. 2 dargestellten Verläufe für die Signalstörabstände in Abhängigkeit von der Abtastphase. Die Abtastphasen sind hierbei auf den Zeitpunkt des Maximums der Impulsantwort nach dem Kompromißentzerrer 18 und die S/N-Verläufe auf den optimalen Abtastzeitpunkt ohne Noise Prediktor bezogen. Als Störspektrum wurde ein auf der Basis von gemessenen Störsignalen (ANSI Loop 1) ermitteltes Spektrum zugrundegelegt, das sowohl das vom Sigma Delta Modulator 10 herrührende Rauschsignal als auch das modellierte Nebensprechsignal berücksichtigt (Margin = 0 dB).

Fig. 2 zeigt die Signalstörabstände mit und ohne Noise Prediktor. Das linke Diagramm bezieht sich auf 0 km Leitung, das mittlere Diagramm auf 3 km Leitung des Typs AWG 26 und das rechte Diagramm auf 5,5 km Leitung des Typs AWG 26. Die durchgezogene Linie stellt den Verlauf ohne Noise-Prediktor dar, die gestrichelte Linie den Verlauf mit Noise-Prediktor. Der Abtastzeitpunkt ist bezogen auf den Zeitpunkt der optimalen Abtastung ohne Noise-Prediktor, der Noise-Prediktor ist mit zwei Koeffizienten angenommen.

Der Fig. 2 können folgende prinzipiellen Zusammenhänge entnommen werden:

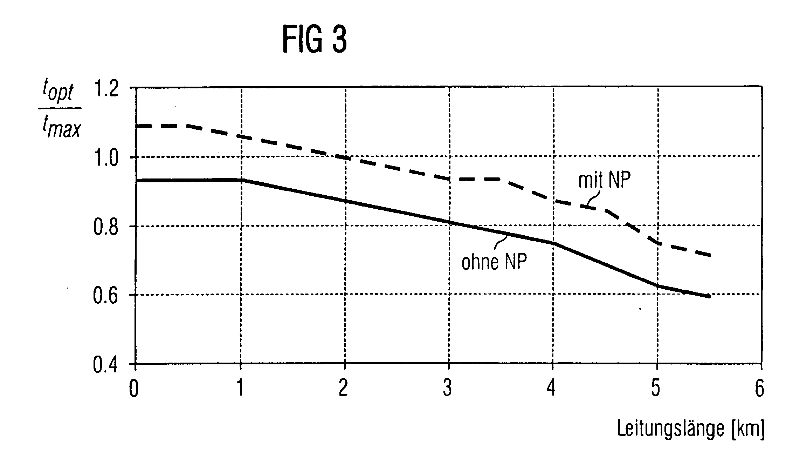

a) mit zunehmender Leitungslänge entfernt sich der optimale Abtastzeitpunkt vom Zeitpunkt des Impulsmaximums (siehe auch Fig. 3)

b) bei Verwendung eines Noise Prediktors liegt der optimale Abtastzeitpunkt näher am Zeitpunkt des Impulsmaximums

c) Der erzielbare S/N-Gewinn bedingt durch den Noise Prediktor ist bei längeren Leitungen größer als bei kürzeren Leitungen

Allgemein kann festgestellt werden, daß zur Erzielung möglichst guter Rauscheigenschaften unabhängig von der Leitungslänge eine Abtastphase gewählt werden sollte, die nicht mehr als etwa $\pm 10$ % des Symboltaktes vom optimalen Abtastzeitpunkt abweichen sollte.

Der unter a) dargestellte Zusammenhang zwischen der zunehmenden Leitungslänge und dem Abstand des optimalen Abtastzeitpunkts vom Zeitpunkt des Impulsmaximums ist in Fig. 3 nochmals dargestellt. Fig. 3 zeigt die Lage des optimalen Abtastzeitpunktes bezogen auf die zeitliche Lage des Impulsmaximums nach dem Kompromißentzerrer 18 in Abhängigkeit von der Leitungslänge, wobei wieder eine Leitung vom Typ AWG 26 angenommen ist. Die durchgezogene Linie zeigt die Verhältnisse ohne Noise-Prediktor, die gestrichelte Linie mit Noise-Prediktor.

Im folgenden wird ein Taktregelkriterium näher untersucht, wie es im derzeitigen IEC-Q Baustein verwendet wird. Das Takregelkriteriums-Filter 24 hat die folgende Übertragungsfunktion:

$$TRK(z) = (1 - z^{-1})^5 \cdot (1 - z^{-2}) \cdot (1 - k_0 \cdot z^{-1})$$

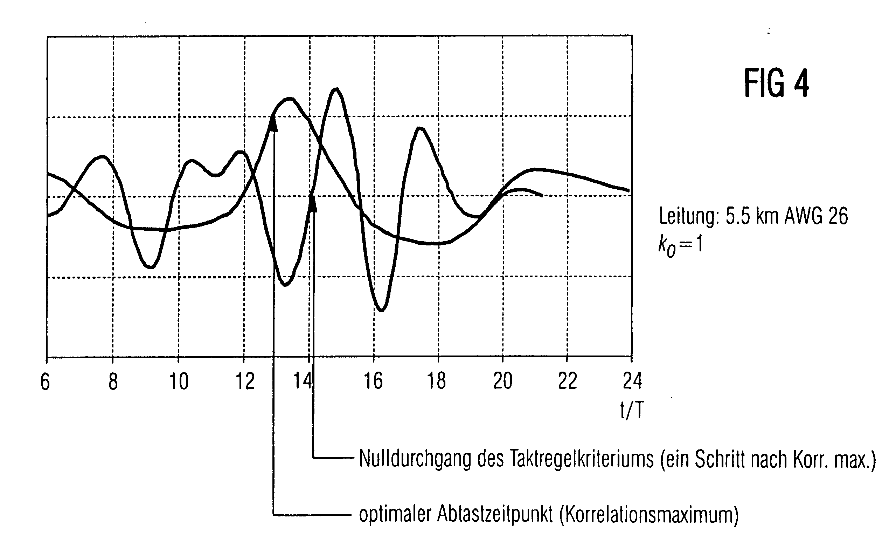

Der Parameter $k_0$ wird hierbei zu 0,5 für kurze Leitungen und zu 1,0 für lange Leitungen gewählt. Zur Illustration der Regelkennlinie ist in Fig. 4 das Signal am Ausgang des Korrelators und das entsprechende Signal am Ausgang des Taktregelkriteriums-Filters 24 dargestellt. Hierbei wird nur die Reaktion auf das Sendesyncwort gezeigt, die Sendedaten werden zu Null gesetzt. Man erkennt deutlich, daß der gewünschte Nulldurchgang des Taktregelkriteriums genau ein Schrittintervall nach dem Korrelationsmaximum auftritt und der Nulldurchgang nur geringfügig neben dem optimalen Abtastzeitpunkt für diese Leitung liegt.

Die optimale Abtastphase entspricht dabei in Fig. 4 dem Gitternetz, es wird eine Leitung des Typs AWG 26 von 5,5 Kilometer Länge verwendet und der Parameter $k_0$ auf 1,0 gesetzt.

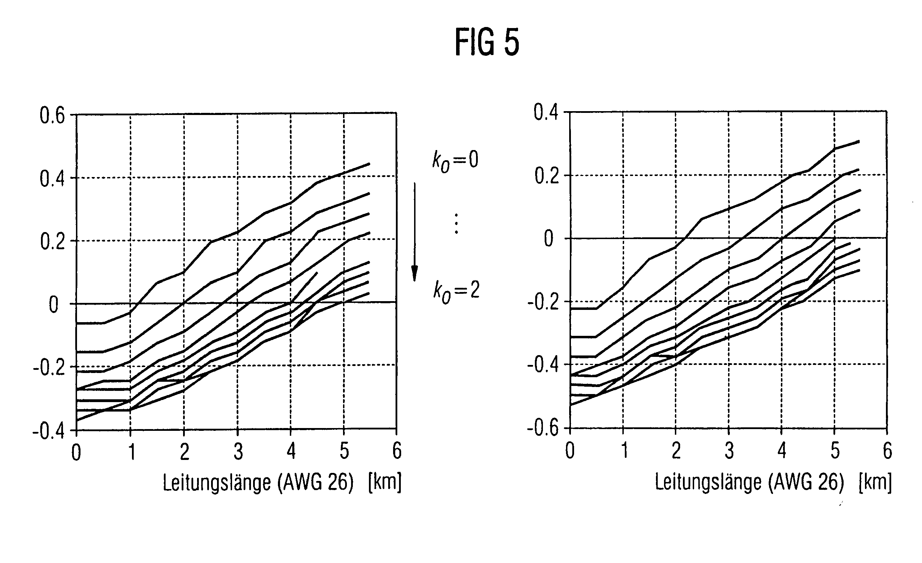

Es soll nun allgemein der Einfluß des Parameters $k_0$ auf die Lage des Abtastzeitpunktes und somit auf das Systemverhalten untersucht werden. Hierbei wird für verschiedene Werte $k_0$ ($k_0$=0 bis $k_0$=2) die Abweichung des Nulldurchgangs von der optimalen Phasenlage für verschiedene Leitungslängen (AWG 26) berechnet. Fig. 5 zeigt die Abweichungen, wobei für die optimalen Abtastzeitpunkte einmal die Werte ohne und einmal mit Berücksichtigung des Noise Prediktors (2 Koeffizienten) zugrunde gelegt wurden. Die nicht ganz glatten Verläufe sind auf die relativ grobe Quantisierung ( T/32 ) sowohl bei der Berechnung der optimalen Abtastzeitpunkte als auch der Nulldurchgänge des Taktregelkriteriums zurückzuführen.

Das linke Diagramm der Fig. 5 zeigt dabei die Verhältnisse ohne Noise-Prediktor, das rechte mit Noise-Prediktor.

Folgende prinzipiellen Eigenschaften können der Fig. 5 entnommen werden:

- Mit steigendem Wert für $k_0$ entfernt sich der Nulldurchgang vom Zeitpunkt des Impulsmaximums. Die Abweichung des Nulldurchgangs vom optimalen Abtastzeitpunkt sinkt bei längeren Leitungen mit größerem $k_0$-Wert und bei kürzeren Leitungen mit kleinerem $k_0$-Wert.

- Da der optimale Abtastzeitpunkt bei Verwendung eines Noise Prediktors etwas näher am Zeitpunkt des Impulsmaximums liegt, sind hier zur Erreichung eines möglichst optimalen Abtastzeitpunktes etwas kleinere $k_0$-Werte erforderlich.

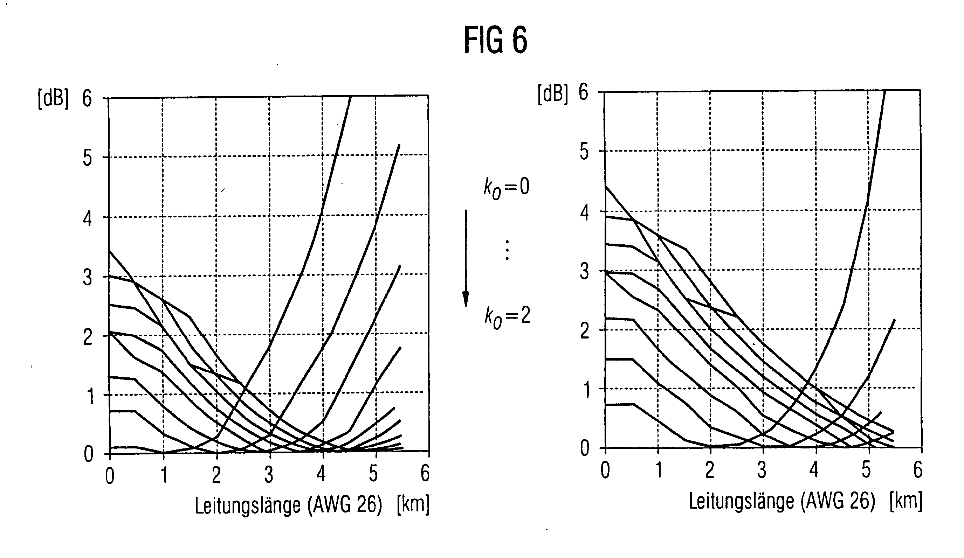

In Fig. 6 ist der Einfluß des Parameters $k_0$ auf das S/N-Verhältnis in Abhängigkeit von der Leitungslänge jeweils mit und ohne Noise Prediktor dargestellt. Auch hier zeigt das linke Diagramm wiederum die Verhältnisse ohne Noise-Prediktor, das rechte mit Noise-Prediktor. Hieraus ist zu entnehmen, daß es nicht möglich ist, mit einem festen Parameter $k_0$ für alle Leitungslängen gleichermaßen günstige Abtastzeitpunkte zu erzielen. In der ersten Version des IEC-Q wurde $k_0$= 0,5 gewählt. Dies stellt einen Kompromiß dar, wenn mit einem einzigen $k_0$-Wert alle denkbaren Einsatzfälle abgedeckt werden sollen. Für extrem lange Leitungen (z.B. 5.5 km in Fig. 6) erhalten wir jedoch ohne Noise Prediktor eine S/N Verschlechterung gegenüber einem System mit optimaler Abtastphase von etwa 3 dB und mit Noise Prediktor eine Verschlechterung um etwa 1 dB. Um das Verhalten zu verbessern, werden in der jetzigen Version des IEC-Q zwei verschiedene $k_0$-Werte verwendet, und zwar $k_0$=0,5 für kürzere Leitungen und $k_0$=1 für längere Leitungen. Die Umschaltung erfolgt mit dem logischen RANGE Signal, mit dem die Empfindlichkeit des A/D Wandlers bei langen Leitungen etwa im Bereich von 3 ... 4 km umgeschaltet wird. Eine genauere Analyse zeigt, daß mit $k_0$=0.25 für kurze und $k_0$=1.25 für lange Leitungen ein etwas besseres Systemverhalten erzielbar ist.

Das am Eingang des Empfängers eingekoppelte Rauschsignal gelangt über den PDM-Tiefpaß 12, den digitalen Hochpaß 16 und den digitalen Kompromißentzerrer 18 zum Taktregelkriteriums-Filter 24. In diesem Filter 24 wird dieses Rauschen mit der Übertragungsfunktion des Taktregelkriteriums bewertet und der Regelgröße überlagert. Ziel muß es sein, dieses Rauschen bei gegebener Steigung des Regelkriteriums im Nulldurchgang möglichst gering zu halten. Geht man näherungsweise von weißem Rauschen mit der Rauschleistungsdichte $R_0$ am Empfänger-Eingang aus, dann erhält man für die Rauschleistung am Ausgang des Taktregelkriteriums-Filters 24:

$$R = R_0 \cdot \int_0^{f_g} |H_{PDM}(f)|^2 \cdot |H_{HP}(f)|^2 \cdot |H_{KEZ}(f)|^2 \cdot |TRK(f)|^2 \cdot df$$

Als Kriterium zur Beurteilung des Systems bezüglich Einkopplung von Rauschen in den Taktregelkreis kann die Größe $F = \dfrac{S}{\sqrt{\dfrac{R}{R_0}}}$ herangezogen werden. S bezeichnet hierbei die Steigung des Regelkriteriums im Nulldurchgang.

Es werden nun einige mögliche Übertragungsfunktionen bezüglich Rauschverhalten näher untersucht. Sie sind so dimensioniert, daß bei einer Leitungslänge von 5,5 km ( AWG 26 Leitung) der Nulldurchgang näherungsweise im optimalen Abtastzeitpunkt erfolgt. Hierbei wird eine Übertragungsfunktion der Form

$$TRK(z) = \left(1 - z^{-1}\right)^n \cdot \left(1 - z^{-1}\right)^m (1 - k_0 \cdot z^{-1})$$

für das Taktregelkriterium zugrunde gelegt.

In der Tabelle 1 sind für zwei weitere mögliche Übertragungsfunktionen die erzielbaren Rauschverbesserungen angegeben. Als Bezugswert dient die oben empfohlene Übertragungsfunktion mit n=5, m=1 und $k_0$=1.25. Die dargestellten weiteren Übertragungsfunktionen sind prinzipiell für die Regelung des Abtasttaktes geeignet. In der Tabelle 1 sind zusätzlich zu den Parametern für die Übertragungsfunktion noch die Lage des Nulldurchgangs bezogen auf das Korrelationsmaximum sowie deren Richtung angegeben. Zur Beurteilung der Rauscheinkopplung wird die auf die oben empfohlene Übertragungsfunktion bezogene Zielfunktion in dB angegeben. Weiterhin ist eine Größe angegeben, die den Einfluß der Symbolinterferenzen beschreibt, worauf weiter unten eingegangen wird.

Es ist zu erkennen, daß durch Wahl einer anderen Übertragungsfunktion , z.B n=2, m=2, $k_0$=0,5 das überlagerte Rauschen reduziert werden kann.

Tabelle 1: Beurteilung verschiedener Übertragungsfunktionen bezüglich Rauschen und Symbolinterferenzen.

| n | m | $k_0$ | Lage des Nulldurchgangs bezogen auf Korrelationsmaximum | Steigung positiv /negativ | F bezogen auf n=5 m=1 und $k_0$=1.25 in dB | Symbolinterferenzen im Nulldurchgang Effektivwert Steigung im Nulldurchgang |
|---|---|---|---|---|---|---|
| 5 | 1 | 1,25 | +1 | positiv | 0.0 dB | $69.10^{-6}$ |
| 2 | 2 | 0,50 | -1 | positiv | 2,9 dB | $70.10^{-6}$ |
| 3 | 2 | 2,00 | 0 | negativ | 2,0 dB | $58.10^{-6}$ |

Die Tabelle 1 könnte noch durch weitere Übertragungsfunktionen mit unterschiedlichen Polynomgraden erweitert werden, die ebenfalls zu einer geringfügig besseren Rauscheinkopplung führen.

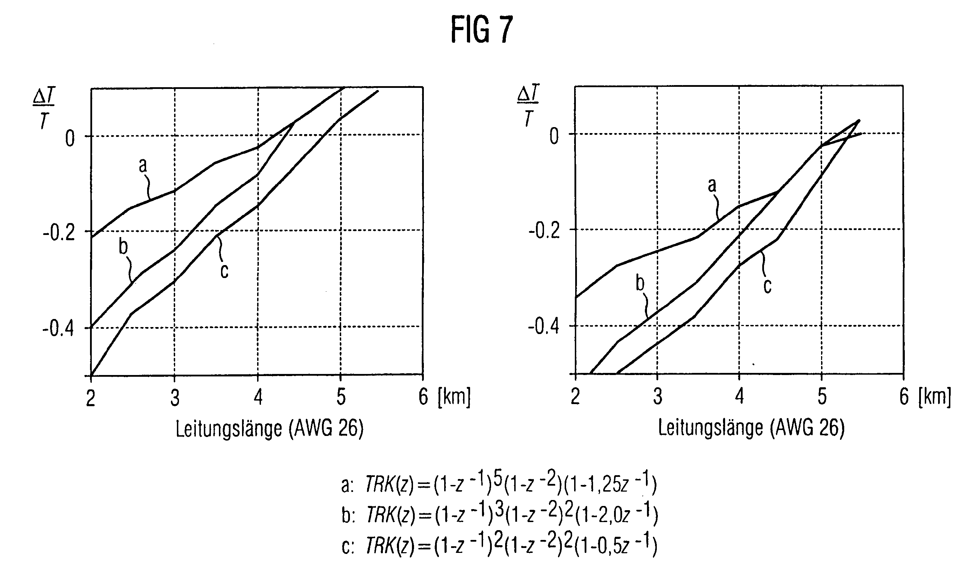

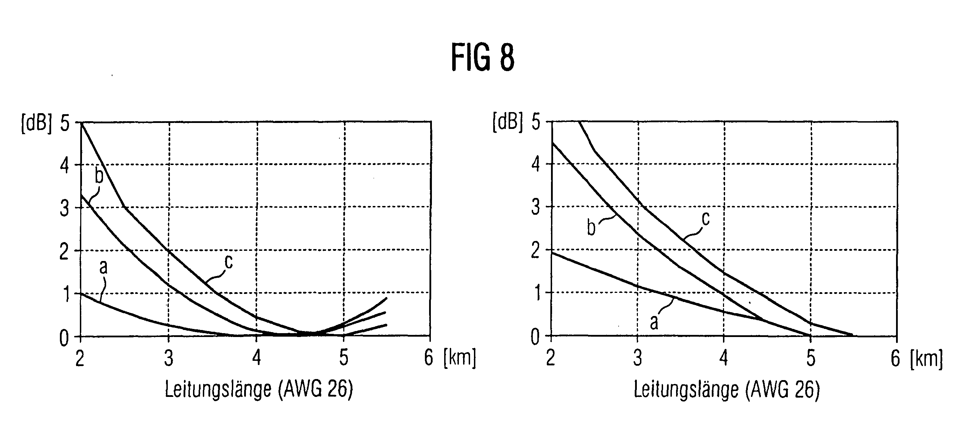

Zur Beurteilung der Einsetzbarkeit der hier angegebenen Taktregelkriterien wird die Abhängigkeit der Abweichung des Abtastzeitpunktes vom optimalen Abtastzeitpunkt und die S/N-Verschlechterung in Abhängigkeit von der Leitungslänge betrachtet, die in den Fig. 7 und 8 dargestellt sind.

Fig. 7 zeigt dabei die Abweisung des Nulldurchgangs vom optimalen Abtastzeitpunkt in Abhängigkeit von der Leitungslänge für die drei verschiedenen Taktregelkriteriums-Übertragungsfunktionen, die jeweils mit den Buchstaben a, b, c, gekennzeichnet sind. Links sind wiederum die Verhältnisse ohne Noise-Prediktor dargestellt, rechts mit Noise-Prediktor.

Fig. 8 zeigt den Signal-Noise-Verlust vor dem Entscheider in Abhängigkeit von der Leitungslänge für die drei in Fig. 7 dargestellten Taktregelkriteriums-Übertragungsfunktionen a, b und c.

Mit zunehmendem Grad der Übertragungsfunktion und damit mit zunehmendem Realisierungsaufwand nimmt einerseits - wie Tabelle 1 zu entnehmen ist - die Rauschverstärkung zu. Andererseits sinkt die Empfindlichkeit der Lage des Abtastzeitpunktes (Nulldurchgang des Regelkriteriums) bei Leitungslängenänderung. Selbst bei Verwendung von zwei verschiedenen Taktregelkriterien für kurze und für lange Leitungen ist die Verschlechterung in den Randbereichen für die beiden niedergradigen Taktregelkriterien zu hoch, so daß für die Realisierung gemäß dem Stand der Technik nur das Taktregelkriterium mit n=5, m=1 und $k_0$=1,25 für lange Leitungen und $k_0$=0,25 für kurze Leitungen in Frage kommt.

Das mit Hilfe des Taktregelkriteriums-Filters 24 gewonnene Regelsignal für die Taktregelung wird durch Übersprechen der unmittelbar vor und nach dem Syncwort ausgesendeten Symbole gestört (Symbolinterferenzen). Auch diese Störungen sollten möglichst gering gehalten werden, um den hierdurch verursachten Eigenjitter zu minimieren.

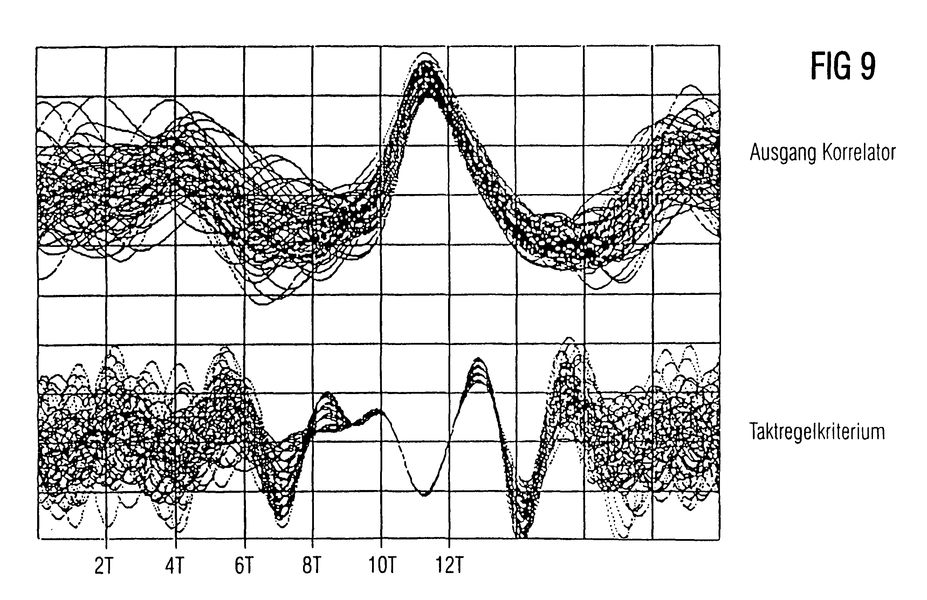

Fig. 9 zeigt sowohl den Korrelator-Ausgang als auch das Taktregelkriterium in Abhängigkeit von der Abtastphase, wobei verschiedene Rahmen synchron zum Sendesyncwort übereinander geschrieben wurden. Man erkennt, daß bei der hier verwendeten Übertragungsfunktion für das Taktregelkriterium mit n=5, m=1 und $k_0$=1,25 und bei der betrachteten Leitungslänge von 5,5 km (AWG 26) die Symbolinterferenzen des Taktregelkriteriums im Nulldurchgang relativ gering sind. Zur quantitativen Auswertung werden nun die Symbolinterferenzen etwas genauer betrachtet.

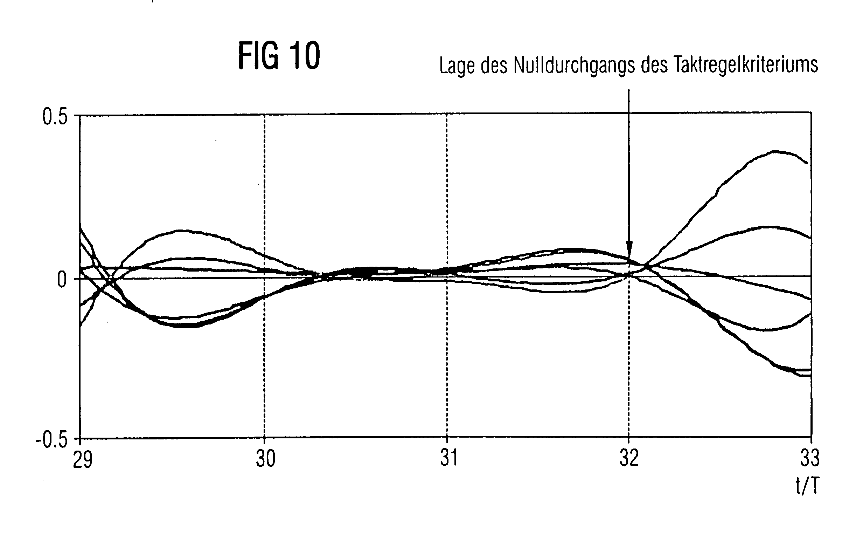

Wegen der Linearität des Systems läßt sich das Signal nach dem Taktregelkriteriums-Filter 24 aus der Reaktion von Sendesyncwort und einer Symbolfolge mit ausgeblendetem Syncwort zusammensetzen. Der zweite Anteil stellt dann unmittelbar den Anteil der störenden Symbolinterferenzen dar. Fig. 10 soll dies etwas verdeutlichen. Für einige verschiedene Datenfolgen ist das am Ausgang des Taktregelkriteriums-Filters sich ergebende Signal dargestellt, wobei das Sendesyncwort ausgeblendet wurde.

Als Parameter für das Taktregelkriterium wurden auch hier wieder n=5, m=1 und $k_0$=1,25 und eine Leitung des Typs AWG 26 von 5,5 km Länge angenommen.

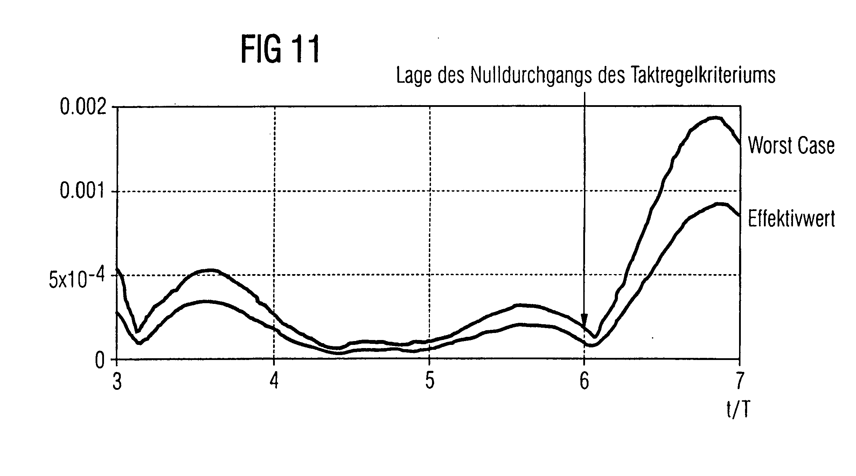

Bei Kenntnis der Impulsantwort nach dem Taktregelkriteriums-Filter 24 kann der Einfluß der Symbolinterferenzen quantitativ analysiert werden. Sowohl die Worst-Case Werte als auch die Effektivwerte des Übersprechens können durch Aufsummieren entweder der Beträge oder der Quadrate der Impulsanwortwerte ermittelt werden, wobei die Impulsantwort jeweils mit einem Rechteckfenster zur Berücksichtigung des ausgeblendeten Sendesyncworts zu bewerten ist. Fig. 11 zeigt sowohl den Verlauf der Worst-Case Werte als auch der Effektivwerte der Symbolinterferenzen, wobei jeweils auf die Steigung des Taktregelkriteriums im Nulldurchgang bezogen wurde.

Abschließend sollen nun anhand eines Beispiels die beiden auf den Taktregelkreis wirkenden Störgrößen bedingt durch äußere und innere Störsignale sowie durch Symbolinterferenzen berechnet werden. Zur Vereinfachung wird nur ein äußeres Störsignal mit einer Rauschleistung von -55 dBm am Eingang des Empfangshochpasses angenommen. Dies entspricht unter Berücksichtigung der Bandbegrenzung durch die Tiefpaßfilter der in der ANSI T1.601 angegebenen Störleistung. Wir erhalten somit eine Störspannung am Hochpaß-Eingang 16 mit einem Effektivwert von 0,65 mV, wobei bei der Umrechnung ein Abschlußwiderstand von 135 Ohm berücksichtigt wurde. Für das Regelkriterium mit n=5, m=1 und $k_0$=1,25 erhalten wir unter Einbeziehung des Hochpasses 16 und des Kompromißentzerrers eine Rauschübertragungsfunktion von 3169, womit sich eine Rauschspannung am Eingang des Taktregelkreises von etwa 36,6 mV ergibt.

Der durch Symbolinterferenzen sich ergebende Störanteil beträgt für das hier betrachtete Regelkriterium bei Normierung auf die Steigung der Regelkennlinie (Nulldurchgang des Taktregelkriteriums) 69 $\mu$V (siehe Tabelle 1). Die Steigung beträgt hier etwa 100, so daß sich insgesamt eine Störspannung von 6,9 mV ergibt.

Der Vergleich der beiden Rauschanteile zeigt, daß insgesamt etwa 96,5% der Gesamtrauschleistung durch Verstärkung der äußeren Störungen und nur etwa 3,5% durch Symbolinterferenzen verursacht wird. Der durch Symbolinterferenzen verursachte Rauschpegel ist um etwa 14,5 dB geringer als der durch äußere Störungen verursachte Rauschpegel.

Eine Verbesserung der Rauschübertragungsfunktion bzw. eine Maximierung der oben definierten Vergleichsgröße F hat somit einen wesentlich größeren Einfluß auf die eingekoppelte Rauschleistung und somit auf den zu erwartenden Phasenjitter als eine Reduzierung der Symbolinterferenzen.

Oben wurde gezeigt, daß durch Änderung der Übertragungsfunktion für das Taktregelkriterium 24 zwar die Rauscheinkopplung um fast 3 dB reduziert werden kann (siehe Tabelle 1), wegen der starken Abhängigkeit der Abtastphase bzw. der hierdurch verursachten S/N-Reduzierung von der Leitungslänge diese Realisierungsmöglichkeit jedoch nicht geeignet ist.

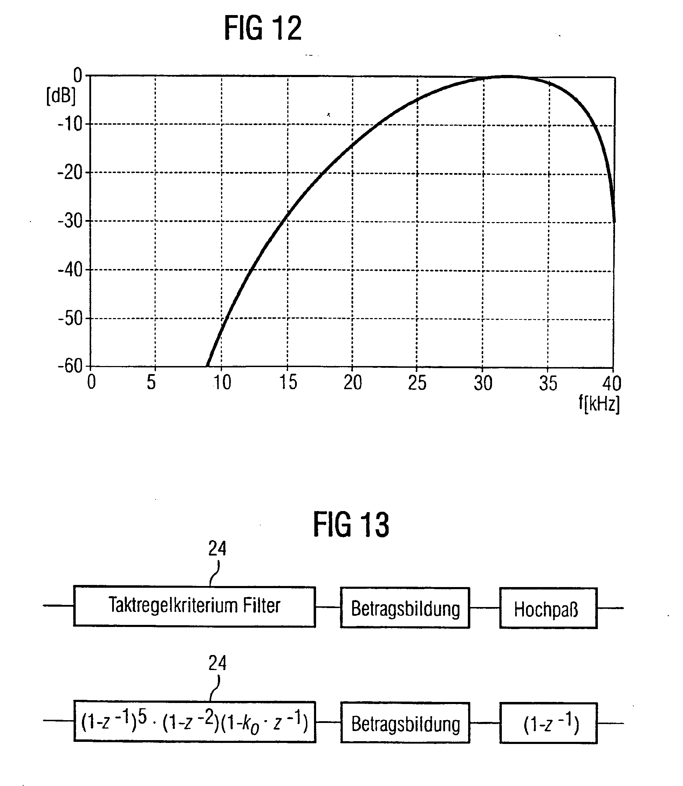

Wegen der Hochpaßeigenschaft der Taktregelkriteriums-Übertragungsfunktion hat das durch äußere und innere Störungen verursachte Rauschen ein farbiges Rauschspektrum mit sehr geringen Anteilen bei niedrigen Frequenzen. In Fig. 12 ist der Dämpfungsverlauf von Hochpaß 16, Kompromißentzerrer 18 und Taktregelkriteriums-Filter 24 dargestellt. Bei Einkoppeln von weißem Rauschen am Empfänger-Eingang entspricht dieser Verlauf dem Verlauf der spektralen Leistungsdichte des dem Taktregelkriterium überlagerten Rauschsignals.

Eine Reduzierung der Rauschleistung kann erfindungsgemäß durch Betragsbildung des Signals am Ausgang des Taktregelkriteriums Filter, womit das Rauschspektrum anders verteilt und schwerpunktmäßig zu tiefen Frequenzen verschoben wird, und anschließender Hochpaßfilterung erreicht werden. Das Blockschaltbild für die erfindungsgemäße Anordnung zeigt Fig. 13.

Zur Erzielung des gleichen Nulldurchgangs wie bei der bisherigen Anordnung muß allerdings der Parameter $k_0$ verändert werden. Mit den Werten $k_0$= 1/8 für lange Leitungen und $k_0$= -3/8 für kurze Leitungen erhalten wir bezüglich der Abtastphase etwa die gleichen Verhältnisse wie bei der bisherigen Struktur mit $k_0$=1,25 bzw. $k_0$=0,25.

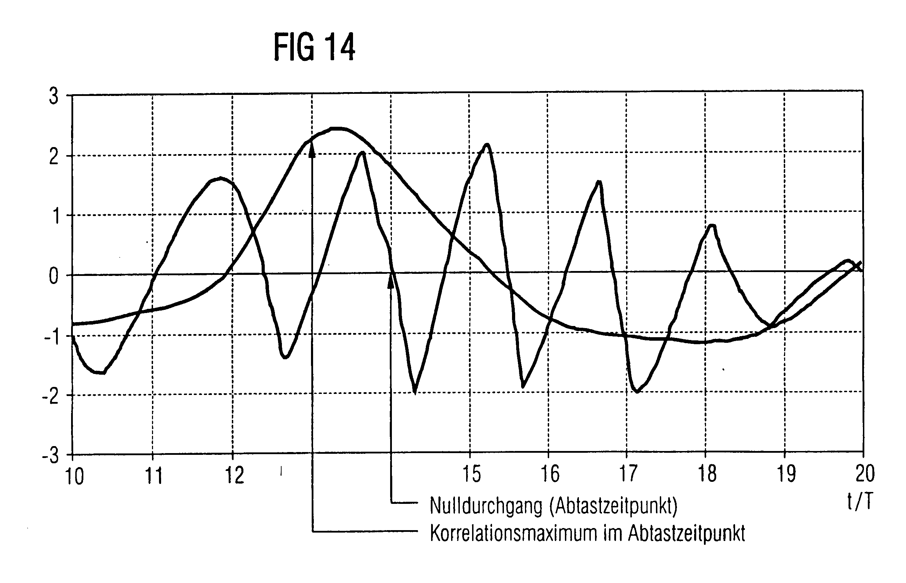

Im Fig. 14 ist das Taktregelkriterium mit n=5; m=1; $k_0=\frac{1}{8}$ sowie die Korrelationssumme dargestellt, die sich bei der Übertragung über eine 5,5 km AWG 26 Leitung ergibt. Wie durch Vergleich mit Fig. 4 zu ersehen ist, erhalten wir wie bei der bisherigen Anordnung den Nulldurchgang eine Symboldauer nach dem Korrelationsmaximum, die Steigung hat allerdings ein entgegengesetztes Vorzeichen, was durch entsprechende Invertierung des Regelsignals korrigiert werden kann. Es fällt weiterhin auf, daß der Regelbereich etwa $\pm$ 0,75T beträgt (Abstand zu den nächsten Nulldurchgängen). Er ist damit geringer als bei der bisherigen Anordnung, jedoch immer noch ausreichend, um eine fehlerfreie Synchronisation zu gewährleisten.

Die dem Taktregelkriterium überlagerten Störungen lassen sich hier wegen der enthaltenen Nichtlinearität (Betragsbildung) nicht mehr aus der Impulsantwort (Symbolinterferenzen) bzw. aus den Filterfrequenzgängen der Teilsysteme (externes und internes Rauschen) bestimmen. Die einzelnen Anteile müssen durch Simulation ermittelt werden.

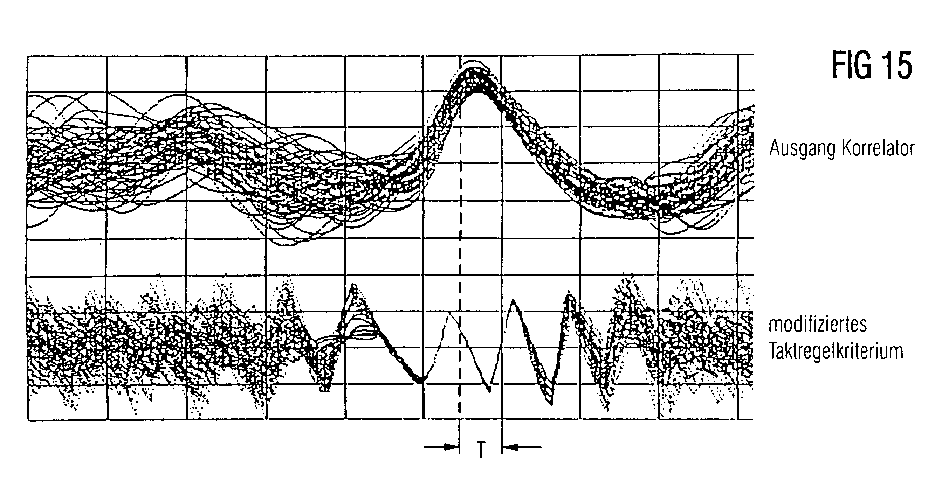

Fig. 15 zeigt die Korrelationssumme Ausgang Korrelator 20 und das modifizierte Taktregelkriterium, die beide mit Hilfe einer Simulation gewonnen wurden. Dabei ist für das Taktregelkriteriums-Filter 24 n=5; m=1; $k_0=\frac{1}{8}$ angenommen und es wird eine Übertragung über 5,5 km AWG26 - Leitung simuliert. Der Einfluß der Symbolinterferenzen im Nulldurchgang des Taktregelkriteriums ist hier ebenfalls gering, wie ein Vergleich mit Fig. 9 zeigt.

Der Einfluß der äußeren und inneren Störungen muß hier durch Simulation ermittelt werden.

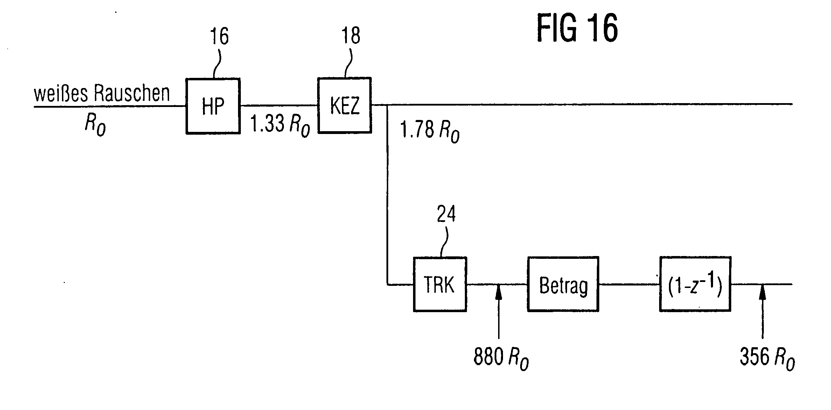

In Fig. 16 sind die Rauschleistungen am Ausgang der einzelnen Blöcke innerhalb des Empfängers angegeben. Dabei wird von einer weißen Rauschquelle am Empfänger-Eingang mit der spektralen Leistungsdichte $R_0$ ausgegangen. Dabei ist für das Taktregelkriteriums-Filter 24 n=5; m=1; $k_0=\frac{1}{8}$ angenommen.

Hiernach ergibt sich eine Rauschverstärkung von 356. Die Steigung der Regelkennlinie (Nulldurchgang des Taktregelkriteriums) beträgt etwa 94, so daß sich für das im vorigen Abschnitt definierte Vergleichskriterium

$$F = \frac{S}{\sqrt{\dfrac{R}{R_0}}}$$

ein Wert von etwa 5 ergibt. Mit der bisherigen Lösung ergibt sich mit einer Rauschverstärkung von 3169 und einer Steigung von etwa 100 ein Wert von 1.78. Die Verbesserung beträgt somit etwa 9 dB.

Für die Realisierung des Taktregelkriteriums wird daher erfindungsgemäß die Anordnung nach Fig. 13 mit $k_0$=-3/8 für lange Leitungen und $k_0$=1/8 für kurze Leitungen vorgeschlagen.

**Patentansprüche**

1. Vorrichtung zur Regelung des Abtasttaktes in einem digitalen Datenübertragungssystem, bei dem in regelmäßigen zeitlichen Abständen ein Synchronisierwort übertragen wird, mit dem auch der empfangsseitige Abtasttakt geregelt wird, wobei das empfangene, abgetastete und gefilterte Signal einem Taktregelkriteriumsfilter (24) und einer Vorrichtung (20,22) zur Erkennung des Synchronisierwortes zugeführt wird und diese Vorrichtung (20,22) einen Schalter (26) ansteuert, der das Taktregelkriterium einer Verstellogik (30) für den Abtasttakt (Symboltakt) zuführt, **dadurch gekennzeichnet, daß** zwischen dem Taktregelkriteriumsfilter (24) und der Verstellogik (30) eine Betragsbildungsschaltung und ein Hochpaß angeordnet sind.

2. Vorrichtung nach Anspruch 1, **dadurch gekennzeichnet, daß** die Übertragungsfunktion des Hochpasses (1-$z^{-1}$) lautet.

3. Vorrichtung nach Anspruch 1 oder 2, **dadurch gekennzeichnet, daß** die Übertragungsfunktion des Taktregelkriteriumsfilters (24) (1-$z^{-1}$)$^5$*(1-$z^{-2}$)*(1-$k_0 z^{-1}$) lautet.

4. Vorrichtung nach Anspruch 3, **dadurch gekennzeichnet, daß** $k_0$ =-$\frac{3}{8}$ für kurze Leitungen und $k_0$ = $\frac{1}{8}$ für lange Leitungen gewählt wird.

**5.** Verfahren zur Regelung des Abtasttaktes in einem digitalen Datenübertragungssystem, bei dem in regelmäßigen zeitlichen Abständen ein Synchronisierwort übertragen wird, mit dem auch der empfangsseitige Abtasttakt geregelt wird, wobei das empfangene, abgetastete und gefilterte Signal durch ein Taktregelkriteriumsfilter (24) gefiltert und gleichzeitig einem Detektionsverfahren zur Erkennung des Synchronisierwortes unterworfen wird, wobei bei Erkennung eines Synchronisierwortes der Ausgangswert des Taktregelkriteriumsfilters (24) eine Verstellogik (30) für den Abtasttakt (Symboltakt) steuert, **dadurch gekennzeichnet, daß** der Betrag des Ausgangswerts des Taktregelkriteriumsfilters gebildet wird und dieser einer Hochpaßfilterung unterworfen wird, bevor er der Verstellogik (30) zugeführt wird.

**6.** Verfahren nach Anspruch 5, **dadurch gekennzeichnet, daß** die Übertragungsfunktion der Hochpaßfilterung $(1-z^{-1})$ lautet.

**7.** Verfahren nach Anspruch 5 oder 6, **dadurch gekennzeichnet, daß** die Übertragungsfunktion des Taktregelkriteriumsfilters (24) $(1-z^{-1})^5*(1-z^{-2})*(1-k_0 z^{-1})$ lautet.

**8.** Verfahren nach Anspruch 7, **dadurch gekennzeichnet, daß** der Wert für $k_0$ auf $-\tfrac{3}{8}$ für kurze Leitungen und auf $+\tfrac{1}{8}$ für lange Leitungen eingestellt wird.

**Claims**

**1.** Apparatus for controlling the sampling clock in a digital data transmission system, in which a synchronization word is transmitted at regular time intervals, by means of which the sampling clock at the receiving end is also controlled, with the received, sampled and filtered signal being supplied to a clock control criterion filter (24) and to an apparatus (20,22) for identification of the synchronization word, and this apparatus (20,22) actuating a switch (26) which supplies the clock control criterion to an adjustment logic device (30) for the sampling clock (symbol clock), **characterized in that** a magnitude formation circuit and a high-pass filter are arranged between the clock control criterion filter (24) and the adjustment logic device (30).

**2.** Apparatus according to Claim 1, **characterized in that** the transfer function of the high-pass filter is $(1-z^{-1})$.

**3.** Apparatus according to Claim 1 or 2, **characterized in that** the transfer function of the clock control criterion filter (24) is $(1-z^{-1})^5*(1-z^{-2})*(1-k_0 z^{-1})$.

**4.** Apparatus according to Claim 3, **characterized in that** $k_0$=-3/8 for short lines and $k_0$=1/8 for long lines.

**5.** Method for controlling the sampling clock in a digital data transmission system, in which a synchronization word is transmitted at regular time intervals, by means of which the sampling clock at the receiving end is also controlled, with the received, sampled and filtered signal being filtered by a clock control criterion filter (24) and at the same time being subjected to a detection method for identification of the synchronization word, with the output value of the clock control criterion filter (24) controlling an adjustment logic device (30) for the sampling clock (symbol clock) on identification of a synchronization word, **characterized in that** the magnitude of the output value of the clock control criterion filter is formed and is subjected to high-pass filtering before it is supplied to the adjustment control logic (30).

**6.** Method according to Claim 5, **characterized in that** the transfer function of the high-pass filtering is $(1-z^{-1})$.

**7.** Method according to Claim 5 or 6, **characterized in that** the transfer function of the clock control criterion filter (24) is $(1-z^{-1})^5*(l-z^{-2})*(1-k_0 z^{-1})$.

**8.** Method according to Claim 7, **characterized in that** the value for $k_0$ is set to -3/8 for short lines and +1/3 for long lines.

**Revendications**

**1.** Dispositif pour le réglage de l'horloge d'échantillonnage dans un système de transmission de données, dans lequel un mot de synchronisation est transmis à des intervalles de temps réguliers, l'horloge d'échantillonnage coté récepteur étant réglée avec ce dernier, le signal reçu, échantillonné et filtré étant envoyé à un filtre de critère de réglage d'horloge (24) et à un dispositif (20, 22) pour la reconnaissance du mot de synchronisation et ce dispositif (20, 22) commandant un commutateur (26) qui envoie le critère de réglage d'horloge à une logique de réglage (30) pour l'horloge d'échantillonnage (cadence de modulation),
**caractérisé en ce qu'**entre le filtre de critère de réglage d'horloge (24) et la logique de réglage (30) un circuit de formation de valeur absolue et un filtre passe-haut sont disposés.

2. Dispositif selon la revendication 1, **caractérisé en ce que** la fonction de transfert du filtre passe-haut vaut $(1-z^{-1})$.

3. Dispositif selon la revendication 1 ou 2, **caractérisé en ce que** la fonction de transfert du filtre de critère de réglage d'horloge (24) vaut :

$$\left(1-z^{-1}\right)^5 * \left(1-z^{-2}\right) * \left(1-k_0 z^{-1}\right).$$

4. Dispositif selon la revendication 3, **caractérisé en ce qu'**on choisit $k_0$ = -3/8 pour des lignes courtes et $k_0$ = 1/8 pour des lignes longues.

5. Procédé pour le réglage de l'horloge d'échantillonnage dans un système de transmission de données numériques dans lequel un mot de synchronisation est transmis à des intervalles de temps réguliers, l'horloge d'échantillonnage coté récepteur étant réglée avec ce dernier, le signal reçu, échantillonné et filtré étant filtré par un filtre de critère de réglage d'horloge (24) et simultanément soumis à un procédé de détection pour la reconnaissance du mot de synchronisation, lors de la reconnaissance du mot de synchronisation, la valeur de sortie du filtre de critère de réglage d'horloge (24) commande une logique de réglage (30) pour l'horloge d'échantillonnage (cadence de modulation),
**caractérisé en ce que** la valeur absolue de la valeur de sortie du filtre de critère de réglage d'horloge est formée et celle-ci est soumise à un filtre passe-haut avant d'être envoyée à la logique de réglage (30).

6. Procédé selon la revendication 5, **caractérisé en ce que** la fonction de transfert du filtre passe-haut vaut $(1-z^{-1})$.

7. Procédé selon la revendication 5 ou 6, **caractérisé en ce que** la fonction de transfert du filtre de critère de réglage d'horloge (24) vaut :

$$\left(1-z^{-1}\right)^5 * \left(1-z^{-2}\right) * \left(1-k_0 z^{-1}\right).$$

8. Procédé selon la revendication 7, **caractérisé en ce que** la valeur pour $k_0$ est réglée sur -3/8 pour des lignes courtes et sur +1/8 pour des lignes longues.

δ−Δ Modulator

PDM-TP

dig. HP

dig. KEZ

10

12

14

16

18

Symbol-Takt

Taktregel-kriterium

24

Korrelator

20

Rahmen-Takt

26

Rahmen-Erkennung

22

Schleifen-Filter

28

30

Verstell-Logik

ungeregelter Takt

FIG 1

EP 1 116 356 B1

# FIG 2

0 km Leitung (AWG 26)    3 km Leitung (AWG 26)    5,5 km Leitung (AWG 26)

EP 1 116 356 B1

## FIG 3

EP 1 116 356 B1

## FIG 4

Leitung: 5.5 km AWG 26
$k_0 = 1$

— Nulldurchgang des Taktregelkriteriums (ein Schritt nach Korr. max.)

— optimaler Abtastzeitpunkt (Korrelationsmaximum)

# FIG 5

Leitungslänge (AWG 26)  [km]

Leitungslänge (AWG 26)  [km]

$k_0 = 0$

$k_0 = 2$

EP 1 116 356 B1

FIG 6

FIG 7

a: $TRK(z) = (1-z^{-1})5(1-z^{-2})(1-1,25z^{-1})$
b: $TRK(z) = (1-z^{-1})3(1-z^{-2})2(1-2,0z^{-1})$
c: $TRK(z) = (1-z^{-1})2(1-z^{-2})2(1-0,5z^{-1})$

# FIG 8

Leitungslänge (AWG 26)

Leitungslänge (AWG 26)

EP 1 116 356 B1

FIG 9

Ausgang Korrelator

Taktregelkriterium

2T   4T   6T   8T   10T   12T

EP 1 116 356 B1

FIG 10

Lage des Nulldurchgangs des Taktregelkriteriums

EP 1 116 356 B1

## FIG 11

Lage des Nulldurchgangs des Taktregelkriteriums

Worst Case

Effektivwert

## FIG 12

## FIG 13

## FIG 14

Nulldurchgang (Abtastzeitpunkt)

Korrelationsmaximum im Abtastzeitpunkt

t/T

EP 1 116 356 B1

FIG 15

Ausgang Korrelator

modifiziertes
Taktregelkriterium

$T$

EP 1 116 356 B1

**FIG 16**

weißes Rauschen
$R_0$ —— [16 HP] —— $1.33\,R_0$ —— [18 KEZ] —— $1.78\,R_0$

[24 TRK] —↑ $880\,R_0$ —— [Betrag] —— [$(1-z^{-1})$] —↑ $356\,R_0$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5065412 A